# EUROPEAN PATENT APPLICATION

(11) **EP 1 331 430 A2**
(43) Date of publication of application: **30.07.2003**
(21) Application number: 03075119.2
(22) Date of filing: 15.01.2003
(51) Int. Cl.: F16M 11/04

(54) **A device suitable for connection thereto of a component, such as a flat panel display screen, as well as a carrier suitable for use with such a device**

(30) Priority: 25.01.2002 NL 1019835
(71) Applicant: Vogel's Holding B.V., 5628 DB Eindhoven (NL)
(72) Inventor: van Groesen, Wilhelmus Maria, 5017 GA Tilburg (NL)
(74) Representative: Dorna, Peter

(57) **Abstract**

A device suitable for connection thereto of a component, such as a flat panel display screen. The device comprises an elongated tube (3) and a carrier (4) attached to said tube for connecting the component. A wall of the tube is provided with a slot (7) extending along the entire length of the tube, parallel to the central axis, as well as with at least one strip (14) covering said slot.

## Description

The invention relates to a device suitable for connection thereto of a component, such as a flat panel display screen, which device comprises an elongated tube and a carrier attached to said tube for connecting the component, in which a wall of the tube is provided with a slot extending substantially along the entire length of the tube, parallel to the central axis, as well as with at least one strip covering said slot.

The invention also relates to a carrier suitable for use with such a device.

With such a device, which is known from DE-3733704, the carrier is slid over one end of the tube, being movable thereover by a limited distance. This enables vertical adjustment of the component, albeit over said limited distance.

In addition, the slot is fully covered along the entire length of the strip by means of said strip, as a consequence of which cables can only exit the slot on either side of the strip.

This known device is not suitable for use in relatively large spaces, such as exhibition buildings, where ceiling-suspended display screens are frequently used for providing visitors with information they may require.

The device by means of which such a display screen is suspended from the sealing must be designed to enable easy removal of the device after the exhibition. When the device is being mounted, it must be relatively easy to suspend a display screen therefrom and connect it to the electric mains and to a community antenna system.

The device should have an aesthetic appearance when the display screen is connected. This is especially important if use is made of the recently developed flat panel display screens, such as plasma screens. Such display screens have a relatively luxury appearance, and a matching device should be used.

The object of the invention is to provide a device to which a component, such as a flat panel display screen, can be connected in a simple manner, and which has a neatly finished appearance.

This object is accomplished with the device according to the invention in that the carrier is movable substantially along the entire length of the tube, whilst the strip is a flexible strip which is capable of deformation under spring force.

Since the tube is provided with a slot, it is relatively easy to fit the cable required for connecting the display screen in the tube. The cables that have been placed in the tube through the slot are hidden from view by the flexible strip. The slot and the flexible strip make it possible to have the cables enter and exit the tube at any desired location. Moreover, the tube can readily be cut to any desired length, for example by sawing, so that the device can easily be rendered suitable for connecting a display screen thereto at a desired distance from the ceiling.

One embodiment of the device according to the invention is characterized in that the tube is provided with a number of openings extending transversely through the tube, which openings are arranged in spaced-apart relationship in a direction parallel to the central axis of the tube, in one of which openings a supporting pin supporting the carrier can be removably fitted.

The location of the supporting pin determines the position of the carrier on the tube. In this way it is also possible to realise a desired distance between the carrier and the ceiling. The advantage of this is that it is no longer necessary to cut the tube to the desired length. A precise adjustment can be realised by using a relatively small spacing between the openings.

The supporting pin extending through the tube may have a relatively small diameter, so that sufficient space is left in the tube for the cables to be passed therethrough.

Another embodiment of the device according to the invention is characterized in that the carrier is provided with a supporting ring which is supported by the supporting pin.

The supporting ring enables rotation of the carrier about the central axis, with the supporting pin providing continuous support for the carrier.

This makes it possible to adjust the desired degree of rotation of the carrier relative to the central axis of the tube after the carrier has been attached to the tube.

Yet another embodiment of the device according to the invention is characterized in that the carrier is provided with a carrier plate which is pivotable about a pivot pin.

The pivotable carrier plate enables adjustment of the component to be connected to the carrier plate at a desired pivoting angle with respect to the tube.

The pivot pin preferably extends substantially transversely to the central axis of the tube, so that as pivoting movement of the carrier plate about the pivot pin will effect a change in the angle between the central axis and the carrier plate.

If a flat panel display screen is mounted on the carrier plate, it is possible to adjust a desired viewing angle with respect to the display screen.

Yet another embodiment of the device according to the invention is characterized in that the carrier plate is pin-pivoted to a coupling arm on a side remote from said pivot pin, which coupling arm is pivotally connected to an adjusting pin at an end remote from the carrier plate, which adjusting pin is movable in a direction parallel to the central axis of the tube.

Movement of the adjusting pin will effect a change in the distance between the adjusting pin and the pivot pin, as a result of which the coupling arm will rotate about the adjusting pin and the carrier plate will pivot about the pivot pin.

Since the adjusting pin is movable in a direction parallel to the central axis of the tube, access to the adjusting pin can be ensured even after a component has been connected to the carrier plate. This makes it possible to adjust the desired degree of pivoting movement of the carrier plate and a flat-panel display screen, for example, that is connected thereto only after said display screen has been connected to the carrier plate. Preferably, adjustment of the adjusting pin takes place by means of a bolt, thus enabling infinitely variable movement thereof.

Another embodiment of the device according to the invention is characterized in that the carrier plate comprises two flanges extending transversely to the carrier plate, via which the carrier plate is pivotally connected to the pivot pin.

The tube preferably extends between the flanges in that case, as a result of which a relatively compact device can be realised.

Yet another embodiment of a device according to the invention is characterized in that the carrier comprises interconnected carrier halves positioned on either side of the tube, which carrier halves are each provided with a carrier plate which is pivotable about the pivot pin, with flanges connected to the carrier plates being staggered in a direction parallel to the pivot pin.

Since the flanges connected to the carrier plates are staggered, it is possible to have the pivots of the carrier plates coincide. This leads to a compact device. Furthermore this makes it possible to design the carrier halves as identical parts and to interconnect said carrier halves at their sides remote from the carrier plate, with the flanges of the individual carrier plates being positioned beside each other.

The invention also relates to a carrier as described above. The carrier may also be attached to a massive bar instead of to a tube.

The invention will be explained in more detail hereinafter with reference to the drawing, in which:
Figure 1 is a perspective view of a device according to the invention.
Figure 2 is a side elevation of a part of the device that is shown in Figure 1.
Figure 3 shows a second embodiment of a device according to the invention.

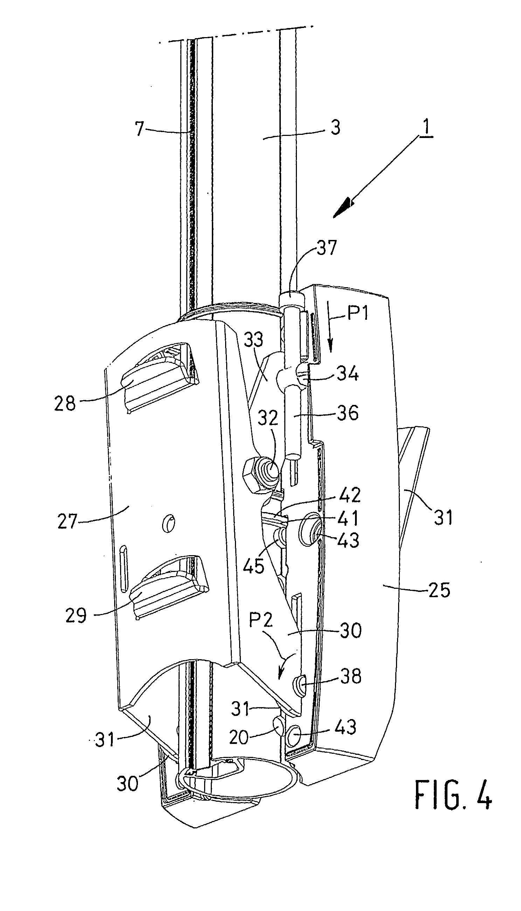

Figure 4 is a perspective, partially cut-away view of the device that is shown in Figure 3.

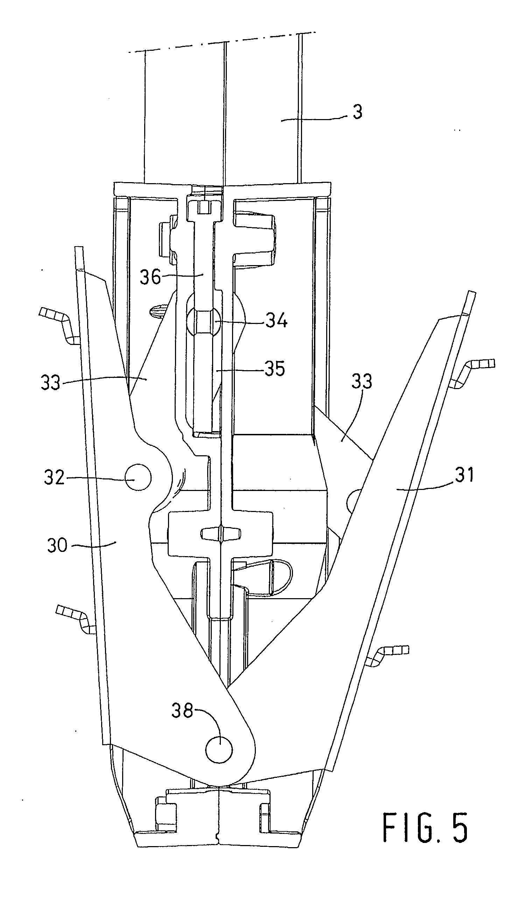

Figure 5 is a side elevation, partially in cross-section, of the device that is shown in Figure 3.
Figures 6A-6C show various phases of the mounting of the device of Figure 3.
Figure 7 is a perspective top plan view of the device that is shown in Figure 1.

Like parts are indicated by like numerals in the figures.

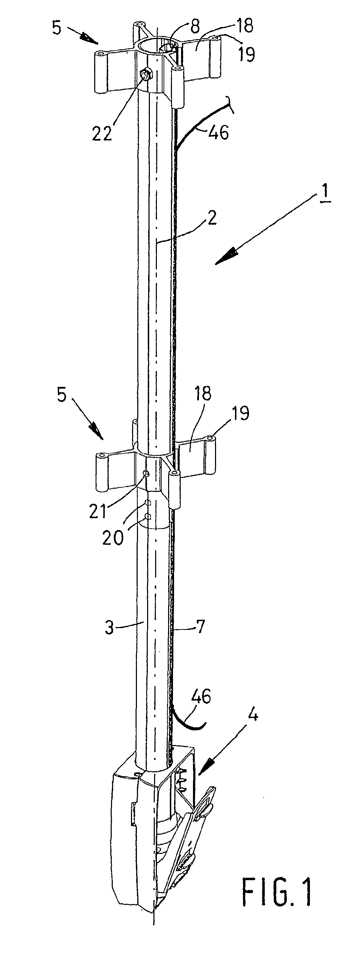

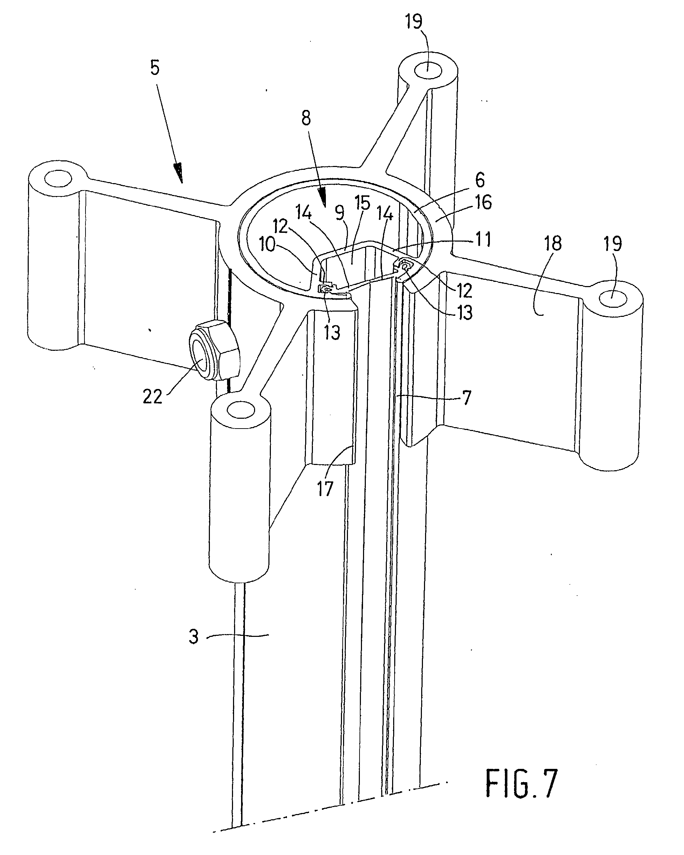

Figure 1 shows a device 1 according to the invention, comprising a tube 3 extending along a central axis 2 and a carrier 4 which is detachably connected to the tube 3. The device 1 furthermore comprises a connecting piece 5 positioned on a side of the tube 3 remote from the carrier 4. A similar connecting piece 5 furthermore extends around the tube 3 near the centre thereof. A wall 6 of the tube 3 is provided with a slot 7 along the entire length of the tube (see Figure 7). Present inside the tube 3 is a U-shaped section 8, which extends along the entire length of the tube, which section comprises a bridge portion 9 and leg portions 10, 11, which are connected to the bridge portion 9 on either side thereof. The leg portions 10, 11 are connected to the wall 6 on either side of the slot 7 with their sides remote from the bridge portion 9. The leg portions 10 and 11 are each provided with flanges 12. Ends 13 of plastic strips 14 are fixed in the spaces bounded by the flanges 12 and the wall 6 of the tube 3. The plastic strips 14 extend towards each other, thereby closing the slot 7 in the tube 3. The U-shaped section 8 and the strips 14 define an elongated space 15 in the tube 3, which space can be used for passing cables therethrough.

The connecting piece 5 comprises a tubular portion 16, whose inside diameter corresponds to the outside diameter of the tube 3. The tubular portion 16 is provided with a slot 17 extending parallel to the central axis of the tubular portion 16, the width of which slot is substantially equal to the width of the slot 7 in the tube 3. The tubular element 16 is furthermore provided with radially extending ribs 18, which are each provided with a sleeve 19 at their ends remote from the tubular portion 16. The central axes of the sleeves 19 extend parallel to the central axis of the tube 3 and the tubular portion 16.

The tube 3 is provided with a number of openings 20 extending transversely to the central axis 2, which openings are used for attaching the connecting piece 5 and the carrier 4 to the tube 3. The connecting piece 5 is provided with holes 21 formed in the tubular portion 16. A bolt 22 is passed through the coaxial holes 21 and an opening 20. A nut (not shown) is screwed onto one end of the bolt 22. A solid and clamped connection of the connecting piece 5 to the tube 3 is obtained by tightening the nut on the bolt 22. The bolt 22 extends substantially parallel to the bridge portion 9, as a result of which the cable passage space 15 in the tube 3 can be relatively large, whilst a strong connection of the connecting piece 5 to the tube 3 can be realised at the same time.

The connecting piece 5 positioned near the end of the tube 3 can be fixed to a ceiling by means of bolts which are passed through the sleeves 19. Furthermore it is possible to pass cables through the sleeves 19, which cables are subsequently fixed to a ceiling.

When a relatively long tube 3 is used, for example a tube having a length of a few metres, it is advisable to provide at least one connecting piece 5 near the centre of the tube 3, in which case bracing wires are passed through the sleeves 19, which bracing wires can be fixed to the ceiling with their ends remote from the connecting piece 5. The bracing wires prevent undesirable swinging of the tube 3 with respect to the ceiling.

Before an explanation is given of the manner in which the cable is fitted in a cable passage space 15, the carrier 4 will be explained in more detail.

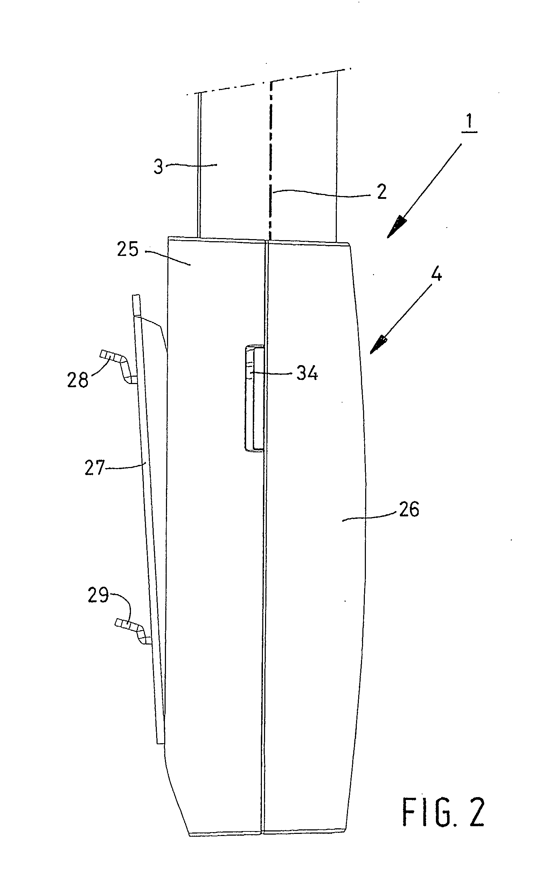

Figure 2 is a side elevation of the device 1 that is shown in Figure 1, which device comprises an elongated tube 3 and a carrier 4 supported by said tube. The carrier 4 comprises two interconnected housing halves 25, 26. The housing half 26 comprises a cover which engages round the tube 3. The housing half 25 likewise extends around the tube 3, but it is provided with a recess on a side remote from the tube 3, through which recess a carrier plate 27 which is pivotally connected to the housing half extends. The carrier plate 27 is provided with hook-shaped lips 28, 29 on a side remote from the tube 3 for connection thereto of a component, such as a flat panel display screen. The hook-shaped lips 28, 29 are formed from the sheet material of the carrier plate 27 by folding.

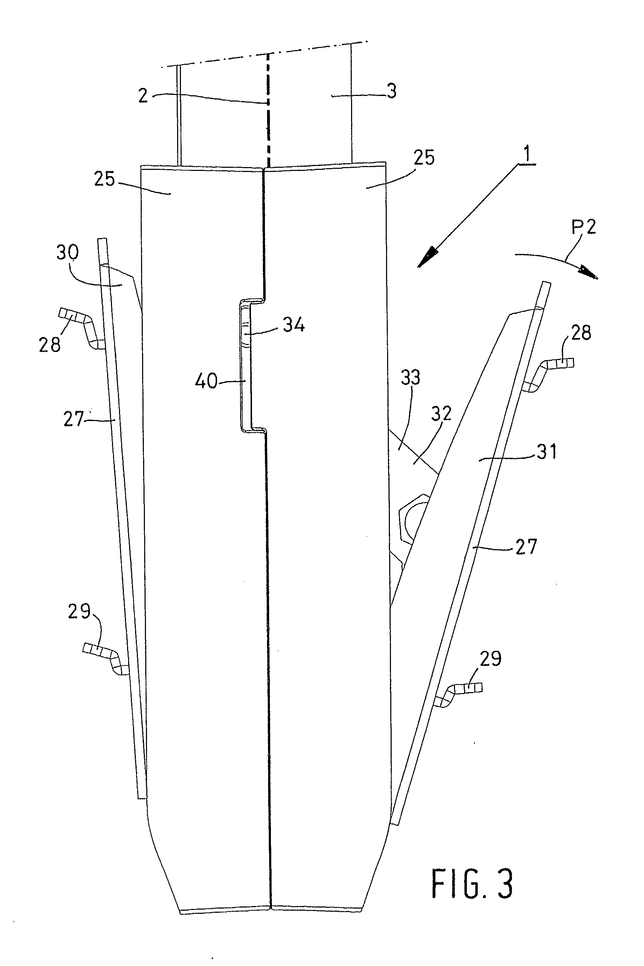

Figure 3 is a side elevation of a second embodiment of the device 1 according to the invention, in which two identical housing halves 25, each comprising a pivotable carrier plate 27, are interconnected. In this way two components, such as flat panel display screens, can be supported by a single tube 13.

Each carrier plate 27 is provided with two flanges 30, 31 positioned on either side of the tube 3, which flanges extend transversely to the carrier plate 27. The flange 30 is pivotally connected to a coupling arm 33 about a pivot pin 32 near its centre. The coupling arm 33 is pivotally connected to an adjusting pin 34 on a side remote from the pivot pin 32. The adjusting pin is slidably accommodated in a guide slot 35 formed in the housing half 25. A bolt 36 extends transversely through the adjusting pin 34, which bolt extends parallel to the central axis 2 of the tube 3. The bolt 36 has a head 37 at one end, which head is provided with a recess for temporary insertion of a tool, such as an Allen key.

The two flanges 30, 31 of the carrier plate 27 are pivotally connected to the housing half 25 about pivots 38 on their sides remote from the pivot pin 32. Rotation of the bolt 36 by means of a tool inserted into the head 37 will cause the adjusting pin 35 to move in the guide slot 35 in the direction indicated by the arrow P1 or in a direction opposite thereto, as a result of which the connecting arm 33 will pivot about the adjusting pin 34. As a result, the pivot pin 32 will be moved away from or towards the central axis 2 of the tube, causing the carrier plate 27 to pivot about the pivot pin 38 in the direction indicated by the arrow P2 or in a direction opposite thereto.

As is shown in Figure 3, the housing half 25 is provided with a recess 40 located near the guide slot 35. The position of the adjusting pin 34 is visible through the recess 40. The housing half 25 is provided with a scale near the recess 40, which scale indicates the angle between the carrier plate 27 and the central axis 2.

The housing halves 25 are each provided with a groove 41 for attachment of the carrier 4 to the tube 3, in which groove a ring 42 can be positioned. After the ring 42 has been positioned in the housing half 25, said housing halves can be interconnected by means of bolts passed through openings 43.

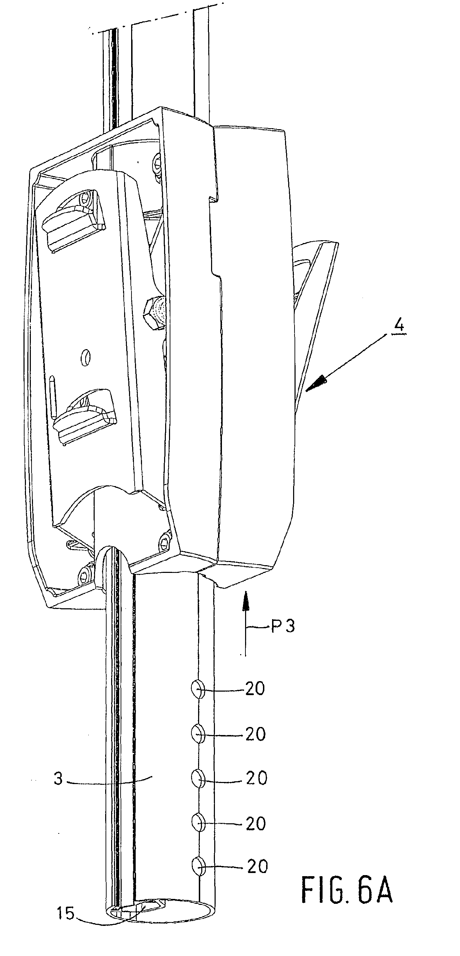

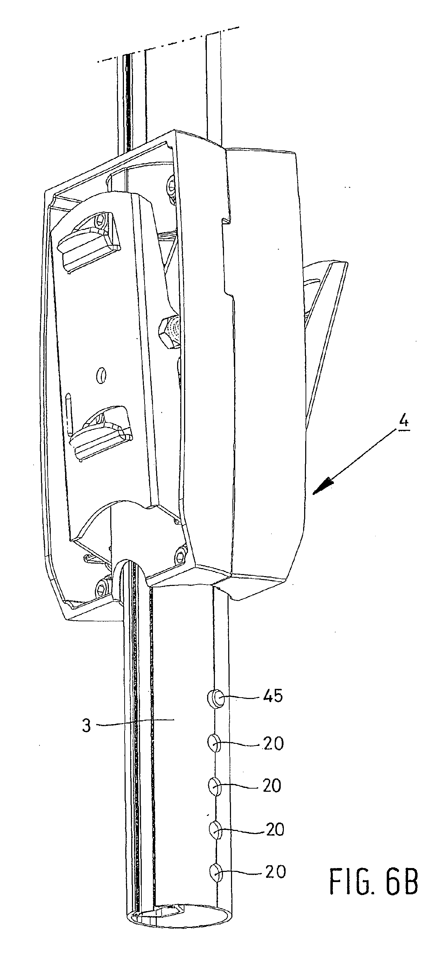

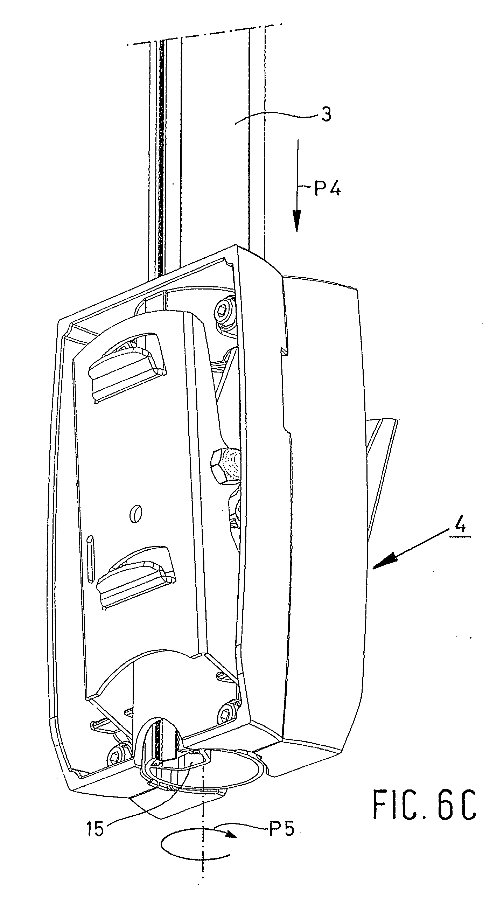

Now the attachment of the carrier 4 to the tube 3 will be explained with reference to Figures 6A-6C. The carrier 4 is slid over the tube 3 in the direction indicated by the arrow P3 until a number of openings 20 in the tube are positioned under the carrier 4. Subsequently a supporting pin 45 is passed through a desired opening 20 (see Figure 6B). Following that, the carrier 4 is moved in a direction indicated by the arrow P4, which direction is opposed to the direction indicated by the arrow P3, until the supporting ring 42 is positioned on the supporting pin 45 (see Figure 6C). In this position, the carrier 4 is rotatable about the central axis 2 of the tube 3 in a direction indicated by the arrow P5 and in a direction opposite thereto.

If a flat panel display screen is connected to the carrier plate 27, said flat panel display screen must be provided with current as well as with an antenna signal. The required cables can be connected to the display screen 27 in a simple manner. To this end, the cables 46 (see Figure 1) are fitted in the cable passage space 15 through the slots 7, 17 present in the tube 3 and in the connecting pieces 5, respectively. The flexible strips 14 move apart for a moment when this is done, resuming the position as shown in Figure 7 under spring force immediately after the cables have been fitted in the cable passage space 15. The cables present in the cable passage space 15 are now hidden from view. The cables 46 are led out of the tube 3 again near the connecting piece 4 so as to be connected to the flat panel display screen.

Since the slot 7 extends along the entire length of the tube 3, the cable can be led into or out of the tube at any desired location, without additional parts being required.

It is also possible to fit the cables 46 in the cable passage space 15 first until ends of the cables 46 project from the tube 3 at the bottom end thereof. If the plug is that are connected to the ends of the cables 46 are relatively small, the carrier 4 can subsequently be slid over the plug is and be connected to the tube 3 in the manner shown in Figures 6A-6C. following that, the cables 46 can be connected to the flat panel display screen from a position under the carrier 4.

It is also possible to attach the tube 3 to a baseplate rather than suspend it from a ceiling, so that the tube 3 can be placed on the floor or be fixed to a wall by means of an arm.

The carrier 4 is suitable for attachment not only to a tube 3 but also to a massive bar. In such a case it is not possible to hide the cables 46 from view, however.

It is also possible not to use a U-shaped section 8 in the tube 3. In such a case the entire tube 3 can be used for the cables.

Furthermore it is possible to suspend other components, such as a supporting platforms, paintings etc, from the carrier.

The tube can be formed from a metal and the strips can be formed from plastic material by means of an extrusion process. Alternatively, the tube and the strips can jointly be formed from plastic material.

It is also possible to use springing louvres as said strips.

The strips may also be made from a metal or a rubber.

It is also possible to move the adjusting pin by means of a gas spring or other construction.

Furthermore it is possible to provide the housing halves 25, 26 with an annular recess for the supporting pin 45 instead of using a loose supporting ring 42.

## Claims

1. A device suitable for connection thereto of a component, such as a flat panel display screen, which device comprises an elongated tube and a carrier attached to said tube for connecting the component, in which a wall of the tube is provided with a slot extending substantially along the entire length of the tube, parallel to the central axis, as well as with at least one strip covering said slot, **characterized in that** the carrier is movable substantially along the entire length of the tube, whilst the strip is a flexible strip which is capable of deformation under spring force.

2. A device according to claim 1, **characterized in that** the tube is provided with a number of openings extending transversely through the tube, which openings are arranged in spaced-apart relationship in a direction parallel to the central axis of the tube, in one of which openings a supporting pin supporting the carrier can be removably fitted.

3. A device according to claim 2, **characterized in that** the carrier is provided with a supporting ring which is supported by the supporting pin.

4. A device according to any one of the preceding claims, **characterized in that** the carrier comprises a carrier plate which is pivotable about a pivot pin.

5. A device according to claim 4, **characterized in that** said pivot pin extends substantially transversely to the central axis of the tube.

6. A device according to claim 4 or 5, **characterized in that** the carrier plate is pin-pivoted to a coupling arm on a side remote from said pivot pin, which coupling arm is pivotally connected to an adjusting pin at an end remote from the carrier plate, which adjusting pin is movable in a direction parallel to the central axis of the tube.

7. A device according to claim 6, **characterized in that** infinitely variable movement of the adjusting pin can be realised by means of a bolt.

8. A device according to any one of the preceding claims 4 - 8, **characterized in that** the carrier plate comprises two flanges extending transversely to the carrier plate, via which the carrier plate is pivotally connected to the pivot pin.

9. A device according to claim 9, **characterized in that** the carrier comprises interconnected carrier halves positioned on either side of the tube, which carrier halves are each provided with a carrier plate which is pivotable about the pivot pin, with flanges connected to the carrier plates being staggered in a direction parallel to the pivot pin.

10. A device according to any one of the preceding claims 3 - 10 suitable for connection thereto of a component, such as a flat panel display screen.
